# EUROPEAN PATENT APPLICATION

(11) **EP 4 632 350 A1**
(43) Date of publication of application: **15.10.2025**
(21) Application number: 25169370.1
(22) Date of filing: 09.04.2025
(51) Int. Cl.: G01N 15/10, G01N 15/14, G01N 15/149

(54) **QUANTITATIVE FLOW CYTOMETRY LIGHT SCATTER DETECTOR ALIGNMENT**

(30) Priority: 10.04.2024 US 202463632452 P
(71) Applicant: Becton, Dickinson and Company, Franklin Lakes, New Jersey 07417-1880 (US)
(72) Inventor: Welsh, Joshua Aden, Walnut Creek, 94597 (US)
(74) Representative: Bals & Vogel Patentanwälte PartGmbB

(57) **Abstract**

The present disclosure provides methods of determining an alignment adjustment for a light scatter detector system of a flow cytometer. Methods of interest include: generating control data by the flow cytometer; determining a quantitative metric of the alignment for the light scatter detector system based on the control data; and determining the alignment adjustment for the light scatter detector system based on the quantitative alignment metric. In some embodiments, the subject methods further include adjusting the light scatter detector system based at least in part on the alignment adjustment by performing, e.g., a hardware or software alignment adjustment. The subject methods may be implemented automatically via computer. Systems, non-transitory computer-readable storage media, and kits for carrying out the subject methods are also provided.

## Description

### CROSS-REFERENCE TO RELATED APPLICATION

Pursuant to 35 U.S.C. § 119 (e), this application claims priority to the filing dates of United States Provisional Patent Application Serial No. 63/632,452 filed April 10, 2024, the disclosure of which application is incorporated herein by reference in their entirety.

### INTRODUCTION

The characterization of analytes in biological fluids has become an important part of biological research, medical diagnoses, and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort particles of interest such as, e.g., cells of a blood sample. A flow cytometer typically includes a sample reservoir for receiving a fluid sample, such as a blood sample, and a sheath reservoir containing a sheath fluid. The flow cytometer transports the particles (including cells) in the fluid sample as a particle stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. Separation of particles of interest can been achieved by adding sorting or collection capabilities to a flow cytometer. For example, particles in a segregated stream, detected as having one or more desired characteristics, may be individually isolated from the sample stream by mechanical or electrical removal.

To characterize the particles in the flow stream, light must impinge on the flow stream and be collected. Light sources in flow cytometers can vary and may include one or more broad spectrum lamps, light emitting diodes, as well as single wavelength lasers. The light source is aligned with the flow stream and an optical response from the illuminated particles is collected and quantified. For example, particles in a fluid suspension, as they pass by an interrogation region, may be exposed to excitation light and the light scattering and fluorescence properties of the particles may be measured. Particles or components thereof typically are labeled with fluorescent dyes to facilitate detection. A multiplicity of different particles or components may be simultaneously detected by using spectrally distinct fluorescent dyes to label the different particles or components. In some implementations, a multiplicity of detectors, one for each of the scatter parameters to be measured, and one or more for each of the distinct dyes to be detected, are included in the flow cytometer. The data obtained comprise the signals measured for each of the light scatter detectors and fluorescence detectors.

Flow cytometers may further include means for recording the measured data and analyzing the data. For example, data storage and analysis may be carried out using a computer connected to the detection electronics. For example, the data can be stored in tabular form, where each row corresponds to data for one particle, and the columns correspond to each of the measured parameters. The use of standard file formats, such as an "FCS" file format, for storing data from a flow cytometer facilitates analyzing data using separate programs and/or machines. Using current analysis methods, the data typically are displayed in 1-dimensional histograms or 2-dimensional (2D) plots for ease of visualization, but other methods may be used to visualize data.

The data obtained from an analysis of cells (or other particles) by flow cytometry are often multidimensional, where each cell corresponds to a point in a multidimensional space defined by the parameters measured. Populations of cells or particles can be identified as clusters of points in the data space. The identification of clusters, and thereby populations, can be carried out manually by drawing a gate around a population displayed in one or more 2-dimensional plots, referred to as "scatter plots" or "dot plots" of the data. Alternatively, population clusters can be identified and gates that define the limits of the populations can be determined automatically. Examples of methods for automated gating have been described in, for example, U.S. Pat. Nos. 4,845,653; 5,627,040; 5,739,000; 5,795,727; 5,962,238; 6,014,904; and 6,944,338; and U.S. Pat. Pub. No. 2012/0245889, each incorporated herein by reference. Gating is used to make sense of the large quantity of data that may be generated from a sample.

The parameters measured using a flow cytometer typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules in one or more detectors that measure signal over a specific range of spectral wavelengths. Different cell types can be identified by their light scatter characteristics and fluorescence emissions resulting from, e.g., labeling various cell proteins or other constituents with fluorescent dye-labeled antibodies or other fluorescent probes. In order to ensure a relatively high signal to noise ratio, both FSC and SSC detectors must be aligned in order to achieve optimal light collection from interrogated particles of a flow cytometer sample stream. Scatter detectors (i.e., FSC and SSC detectors) are typically manually aligned by field service engineers, who adjust various optical components associated with a given detector in order to maximize the signals generated by the detector for a set of relatively large (e.g., >3 micron) calibration beads. This is known as 'peaking' the detectors.

### SUMMARY

The present inventor has realized that improvements can be made to the processes by which flow cytometer light scatter detector systems are aligned. In particular it was realized that aligning detectors by peaking, in addition to being time intensive and potentially disruptive, is relatively inconsistent due, e.g., to an inherent reliance on the knowledge and skill of the given field service engineer manually adjusting the detector system. This results in decreases in accuracy as well as difficulties in comparing light scatter data obtained from different instruments, or even the same instrument after alignment by a different field service engineer. As such, a process for deriving a quantitative metric for light scatter collection alignment is desirable. Particularly, automated processes are needed for generating a quantitative metric of light scatter detector system alignment and, subsequently, automatically adjusting the light scatter detector system (in order to, e.g., optimize light collection for each detector of the system) based on the quantitative metric. Further, the quantitative alignment metric may be generated after such an automatic adjustment of a light scatter detector system has taken place in order to, e.g., further align the detector system or assist in comparing data generated by different instruments and systems. Embodiments of the present disclosure satisfy these needs and desires.

Aspects of the disclosure include methods of determining an alignment adjustment for a light scatter detector system of a flow cytometer. Methods of interest include: generating control data by the flow cytometer; determining a quantitative metric of the alignment for the light scatter detector system based on the control data; and determining the alignment adjustment for the light scatter detector system based on the quantitative alignment metric. **In** some embodiments, determining the quantitative alignment metric includes calculating a collection angle based on the control data. **In** these cases, the collection angle may be calculated with respect to an interrogation point of the flow cytometer. In some embodiments, the collection angle is calculated using a light scattering model such as, e.g., a Mie light scatter model. In some embodiments, the light scatter detector system includes a side scatter detector, a forward scatter detector, or both.

In certain embodiments, generating the control data includes: irradiating a bead with the flow cytometer; and measuring a data signal generated by the light scatter detector system. In some embodiments, the control data is generated for a plurality of beads, the plurality of beads including a first bead and a second bead larger than the first bead. In some embodiments, the plurality of beads have a diameter of 50 nm to 3000 nm such as, e.g., a diameter of 100 nm to 1200 nm. In some embodiments, the plurality of beads include polystyrene. In some embodiments, the plurality of beads include fluorescent beads.

In certain embodiments, the method further includes providing the alignment adjustment to a user. In some embodiments, the alignment adjustment includes a software alignment adjustment. For example, the software alignment adjustment may include a collection angle calibration value, a trigger threshold value, a trigger channel option, a detector setting option, a pulse processing option, or any combination thereof. In some embodiments, the alignment adjustment includes a hardware alignment adjustment. In these instances, the hardware alignment adjustment may include an aperture adjustment distance, an aperture adjustment angle, a detector adjustment distance, a detector adjustment angle, or any combination thereof.

In certain embodiments, the method further includes adjusting the light scatter detector system based at least in part on the alignment adjustment. In some embodiments, adjusting the light scatter detector system includes performing a software alignment adjustment. In these instances, the software alignment adjustment may include adjusting a collection angle calibration value, a trigger threshold value, a trigger channel option, a detector setting option, a pulse processing option, or any combination thereof. In some embodiments, adjusting the light scatter detector system includes performing a hardware alignment adjustment. In these cases, the hardware alignment adjustment may include adjusting a position and/or orientation of an optical adjustment component of the flow cytometer. For example, the hardware alignment adjustment may include adjusting the position and/or orientation of an aperture and/or a filter of the flow cytometer. In some embodiments, the hardware alignment adjustment may include adjusting a position and/or orientation of a light scatter detector of the light scatter detector system.

Aspects of the disclosure also include systems for performing the methods of determining an alignment adjustment for a light scatter detector system of a flow cytometer, e.g., as described above and herein. Systems of interest include: a light scatter detector system configured to generate data signals from light received from an interrogation point of a flow cytometer; and a processor including memory operably coupled to the processor wherein the memory includes instructions stored thereon, which when executed by the processor, cause the processor to: generate control data by the flow cytometer; determine a quantitative metric of the alignment for the light scatter detector system based on the control data; and determine an alignment adjustment for the light scatter detector system based on the quantitative alignment metric. Aspects of the disclosure further include non-transitory computer-readable storage media including instructions stored thereon for determining an alignment adjustment for a light scatter detector system of a flow cytometer, and kits including said non- transitory computer readable storage media and/or a set of submicron standard beads for determining the alignment adjustment, e.g., as described above and herein.

### BRIEF DESCRIPTION OF THE FIGURES

The disclosure may be best understood from the following detailed description when read in conjunction with the accompanying drawings. Included in the drawings are the following figures:
**FIGS. 1A** to **1B** depict flow diagrams for practicing methods of determining an alignment adjustment for a light scatter detector system of a flow cytometer according to certain embodiments.
**FIG. 2** depicts a method of determining an alignment adjustment for a light scatter detector system of a flow cytometer in accordance with an embodiment of the disclosure.
**FIG. 3** illustrates multiple methods of adjusting a light scatter detector system of a flow cytometer based on a determined alignment adjustment in accordance with an embodiment of the disclosure.
**FIG. 4** depicts a functional block diagram of an exemplary flow cytometer control system used to implement certain embodiments of the alignment adjustment determining methods of the disclosure.
**FIG. 5** depicts a block diagram of a computing system for use with certain embodiments of the alignment adjustment determining methods of the disclosure.
**FIG. 6** provides schematics of an exemplary flow cytometer system for use with certain embodiments of the alignment adjustment determining methods of the disclosure.
**FIG. 7** provides schematics of an exemplary flow cytometer system for use with certain embodiments of the alignment adjustment determining methods of the disclosure.
**FIG. 8** provides a functional block diagram of a flow cytometer system for use with certain embodiments of the alignment adjustment determining methods of the disclosure.
**FIG. 9** illustrates an exemplary flow cytometer system for use with certain embodiments of the alignment adjustment determining methods of the disclosure.
**FIGS. 10A to 10B** illustrate an exemplary sorting flow cytometer and data processing technique for fluorescence imaging using radiofrequency tagged emissions for use with certain embodiments of the alignment adjustment determining methods of the disclosure.

### DETAILED DESCRIPTION

The present disclosure provides methods of determining an alignment adjustment for a light scatter detector system of a flow cytometer. Methods of interest include: generating control data by the flow cytometer; determining a quantitative metric of the alignment for the light scatter detector system based on the control data; and determining the alignment adjustment for the light scatter detector system based on the quantitative alignment metric. In some embodiments, the subject methods further include adjusting the light scatter detector system based at least in part on the alignment adjustment by performing, e.g., a hardware or software alignment adjustment. The subject methods may be implemented automatically via computer. Systems, non-transitory computer-readable storage media, and kits for carrying out the subject methods are also provided.

Before the present invention is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." **The** term "about" is used herein to provide literal support for the exact number that it precedes, as well as a number that is near to or approximately the number that the term precedes. **In** determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### METHODS OF DETERMINING ALIGNMENT ADJUSTMENTS

As summarized above, methods of determining an alignment adjustment for a light scatter detector system of a flow cytometer are provided. Aspects of the methods include: generating control data by the flow cytometer; determining a quantitative metric of the alignment for the light scatter detector system based on the control data; and determining the alignment adjustment for the light scatter detector system based on the quantitative alignment metric. In some embodiments, the subject methods further include adjusting the light scatter detector system based at least in part on the alignment adjustment by performing, e.g., a hardware or software alignment adjustment. The subject methods may be computer-implemented methods as, e.g., the subject methods are particularly suited for automatic implementation via computer. For example, the subject methods of adjusting a light scatter detector system of a flow cytometer may be implemented automatically via computer through electronic control of, e.g., one or more of the adjustable alignment components (e.g., collection apertures and/or lenses) described herein.

In some embodiments, determining the quantitative alignment metric includes calculating a collection angle based on the control data. By collection angle is meant a solid angle of scattered light transmitted onto a given light scatter detector by, e.g., the light collection components of a given light scatter detector (such as, e.g., a collection lens and/or a collection aperture). In some embodiments, the collection angle is calculated with respect to an interrogation point of the flow cytometer. In other words, a measure of the amount of the field of view of the interrogation point captured by a given light scatter detector may be calculated. In some embodiments, the collection angle is calculated using a light scattering model such as, e.g., a Mie light scatter model. In some embodiments, the light scatter detector system includes a side scatter detector, a forward scatter detector, or both.

In certain embodiments, generating the control data includes: irradiating a bead with the flow cytometer; and measuring a data signal generated by the light scatter detector system. In these cases, the data signal may be generated from light scattered by the irradiated bead, e.g., at an interrogation point of the flow cytometer. In some embodiments, the control data is generated for a plurality of beads including a first bead and a second bead larger than the first bead. In some embodiments, the beads used to generate the control data include three or more different sizes of beads such as, four or more different sizes, or six or more, or ten or more. In some embodiments, the control beads include six different sizes of beads. The control beads (i.e., beads irradiated at, e.g., an interrogation point of the flow cytometer in order to generate control data) may have a diameter of 50 nm to 3000. In some embodiments, the control beads have a diameter of 50 nm to 2000 nm, or 50 nm to 1500 nm, or 50 nm to 1200 nm, or 100 nm to 3000 nm, or 150 nm to 3000 nm, or 200 nm to 3000 nm, or 100 nm to 1500 nm, or 100 nm to 1200 nm. In some embodiments, the control beads include six different sizes of beads and have a diameter of 100 nm to 1200 nm. In some embodiments, the control beads all have the same refractive index. In other embodiments, the control beads include beads having different refractive indices such as, e.g., beads having two or more different refractive indices. In some embodiments, the control beads include polystyrene. For example, the control beads may include six different sizes of polystyrene beads having a diameter of 100 nm to 1200 nm. In some embodiments, the control beads include fluorescent beads. For example, the control beads may include six different sizes of polystyrene beads having a diameter of 100 nm to 1200 nm and one fluorescent bead (i.e., the control beads may include seven different types of beads).

In some embodiments, the quantitative metric (and, e.g., the alignment adjustment) is determined for the light scatter detector (i.e., of the light scatter detector system) which generated the data signals from the control beads. In some cases, the light scatter detector system includes a plurality of light scatter detectors, and the control data includes measured data signals generated by each of the scatter detectors for each of the control beads. In some embodiments, a quantitative metric of an alignment is determined for each light scatter detector which generated control data from the beads. In some instances, a quantitative metric of an alignment is determined for a light scatter detector from control data generated by a different light scatter detector of the system. For example, a quantitative alignment metric may be determined for a first light scatter detector from control data generated by a second (i.e., different) light scatter detector of the system sharing one or more of the same light collection components with the first detector (such as, e.g., the same collection lens and/or collection aperture). In some cases, a quantitative alignment metric is determined for a first light scatter detector from control data generated by the first detector and control data generated by a second scatter detector receiving a different angle of scattered light. For example, a quantitative alignment metric may be determined for a side scatter (SSC) detector from control data generated by the side detector and control data generated by a forward scatter (FSC) detector.

As discussed above, determining the quantitative alignment metric may include calculating a collection angle based on the control data using a Mie light scatter model. In some embodiments, the quantitative alignment metric (e.g., collection angle) is calculated using the techniques disclosed in Welsh, et al. ("FCMPASS Software Aids Extracellular Vesicle Light Scatter Standardization." Cytometry A. 2020;97(6):569-581). In some embodiments, the quantitative alignment metric is determined by comparing a measurement of a generated data signal of the control data to a predicted measurement generated using a Mie light scatter model. In some cases, the quantitative alignment metric is determined by comparing a collection angle calculated from the control data (e.g., using a Mie light scatter model) to an ideal or desired collection angle. In some instances, the quantitative alignment metric is determined by calculating a ratio of a measurement generated by a first scatter detector (e.g., an SSC detector) and a measurement generated by a second scatter detector (e.g., an FSC detector) and comparing the ratio to a predicted ratio generated using a Mie light scatter model.

In some embodiments, an alignment adjustment of a light scatter detector is determined from a single quantitative alignment metric. In other instances, an alignment adjustment of a light scatter detector is generated from two or more different quantitative alignment metrics. In some embodiments, determining the alignment adjustment includes: determining a first quantitative alignment metric for a first scatter detector; determining a second quantitative alignment metric for a second scatter detector; and determining an alignment adjustment for the first detector and/or the second detector based on the first quantitative alignment metric and the second quantitative alignment metric. In some cases, the first detector is an SSC detector, and the second detector is an FSC detector. In some cases, both the first and second detectors are SSC detectors or FSC detectors, and both detectors share one or more of the same light collection components (such as, e.g., the same collection lens and/or collection aperture).

In some embodiments, both a light scatter detector and a fluorescence detector share one or more of the same light collection components such as, e.g., the same light collection aperture. In other words, the light scatter detector receives scattered light from the aperture and the fluorescence detector receives fluorescent light from the aperture. In these embodiments, the alignment adjustment may include moving the aperture in order to optimize the light scatter detector alignment and the fluorescence detector alignment. In some embodiments, light that has traversed the aperture is filtered before being received by the light scatter detector. In some embodiments, light scatter detectors and fluorescence detectors have separate optical collection paths (i.e., scattered light may be collected separately from fluorescence light).

In some embodiments, multiple light scatter detectors for a wavelength of light share one or more of the same light collection components such as, e.g., the same light collection aperture. In some instances, the multiple scatter detectors include scatter detectors of various sensitivities. For example, light collection components (i.e., a collection path of scattered light) may transmit light to a plurality of light scatter detectors including a first light scatter detector and a second light scatter detector having a higher sensitivity than the first light scatter detector. In these embodiments, a quantitative alignment metric and/or an alignment adjustment may be generated for the more sensitive (or, e.g., most sensitive) scatter detector of the multiple scatter detectors sharing the same light collection components. The less sensitive scatter detector(s) (i.e., of the multiple scatter detectors sharing the same light collection components) may then be calibrated or adjusted based on the quantitative alignment metric and/or alignment adjustment generated by the more sensitive (or, e.g., most sensitive) scatter detector of the multiple scatter detectors. In this way, a quantitative alignment metric (e.g., a collection angle) may be determined for a light scatter detector having a relatively low sensitivity that would otherwise not allow for such a metric to be calculated. In some embodiments, at least one FSC detector of a FSC light collection path (i.e., receiving light from the one or more light collection components that form an optical path of FSC light) has a sensitivity limit of 500 nm or below such as, e.g., 400 nm or below, or 300 nm or below. In some embodiments, at least one SSC detector of an SSC light collection path (i.e., receiving light from the one or more light collection components that form an optical path of SSC light) has a sensitivity limit of 200 nm or below such as, e.g., 100 nm or below, or 50 nm or below.

In certain embodiments, an alignment adjustment determined for a light scatter detector system (e.g., an alignment adjustment determined for a detector of the light scatter detector system as described above and herein) is performed by a user (e.g., a field service engineer) manually. In these instances, the method (when, e.g., implemented via computer) may further include providing the alignment adjustment to the user. In some embodiments, the alignment adjustment provided to the user includes a software alignment adjustment. For example, the software alignment adjustment provided to the user may include a collection angle calibration value, a trigger threshold value, a trigger channel option, a detector setting option, a pulse processing option, or any combination thereof. In some embodiments, the alignment adjustment provided to the user includes a hardware alignment adjustment. In these instances, the hardware alignment adjustment may include an aperture adjustment distance, an aperture adjustment angle, a detector adjustment distance, a detector adjustment angle, or any combination thereof.

In certain embodiments, the method further includes adjusting the light scatter detector system based at least in part on a determined alignment adjustment. In some embodiments, adjusting the light scatter detector system includes performing a software alignment adjustment. In these instances, the software alignment adjustment may include adjusting a collection angle calibration value, a trigger threshold value, a trigger channel option, a detector setting option, a pulse processing option, or any combination thereof. In some embodiments, adjusting the light scatter detector system includes performing a hardware alignment adjustment. In these cases, the hardware alignment adjustment may include adjusting a position and/or orientation of an optical adjustment component of the flow cytometer. For example, the hardware alignment adjustment may include adjusting the position and/or orientation of an aperture and/or a filter of the flow cytometer. In some embodiments, the hardware alignment adjustment includes adjusting a position and/or orientation of a light scatter detector of the light scatter detector system. In some embodiments, the adjusting is performed automatically, e.g., via a computer.

In some embodiments, a feedback loop including one or more of the steps described above and herein (i.e., the steps of generating control data, determining a quantitative alignment metric, determining an alignment adjustment, and adjusting the light scatter detector system) is implemented, e.g., via computer, in order to optimize the alignment and calibration of one or more scatter detectors of the light scatter detector system. In some embodiments, the feedback loop is implemented continuously. In some instances, the feedback loop is implemented until a desired quantitative alignment metric is reached. For example, an aperture of one or more SSC detectors may be adjusted (e.g., via multiple separate adjustments) until a collection angle within a threshold value of a predetermined collection angle value is calculated for the SSC detector from control beads (e.g., as described above).

In some embodiments, the methods described above and herein are used to reduce variations across different flow cytometers. In some embodiments, a determined quantitative alignment metric is used to compare data generated by different flow cytometers. For example, the most recent quantitative alignment metric calculated for a given scatter detector may be associated with sample data generated by the detector and, e.g., used to normalize the data when comparing it to data generated by detectors of a different flow cytometer. In some embodiments, a scatter detector of the light scatter detector system, after an alignment adjustment has been performed (e.g., as described above and herein), is used to identify extracellular vesicles or specific cell populations of a biological sample. In some embodiments, an aligned detector is used to derive a diameter and/or a refractive index for a small particle of a sample. In some embodiments, an aligned detector is used to sort particles of a sample.

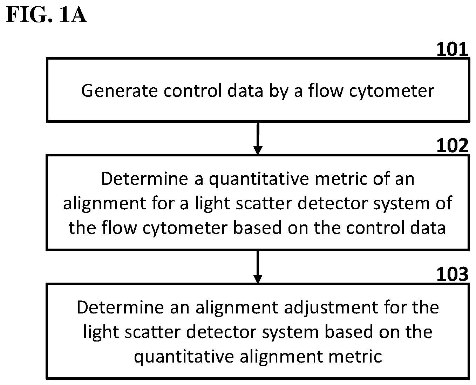

**FIG. 1A** presents a flow diagram for practicing methods of determining an alignment adjustment for a light scatter detector system of a flow cytometer according to certain embodiments of the disclosure. In step **101,** control data is generated by a flow cytometer. The control data may be generated by irradiating a set of control beads (e.g., including six different sizes of polystyrene beads having a diameter of 100 nm to 1200 nm and one fluorescent bead) with the flow cytometer and measuring a data signals generated by the light scatter detector system. In some cases, at least one detector for each collection path (e.g., at least one FSC detector and at least one SSC detector) generates the measured data signals of the control data. In step **102,** a quantitative metric of an alignment is determined for the light scatter detector system based on the control data. In some instances, a quantitative metric is determined for each alignment of the light scatter detector system that may need adjusting (e.g., for each collection path or each scatter detector of the system). The quantitative alignment metric(s) may be determined by calculating a collection angle using a Mie light scatter model. In step **103,** the alignment adjustment for the light scatter detector system is determined based on at least one determined quantitative alignment metric. The alignment adjustment may be a software alignment adjustment or a hardware alignment adjustment.

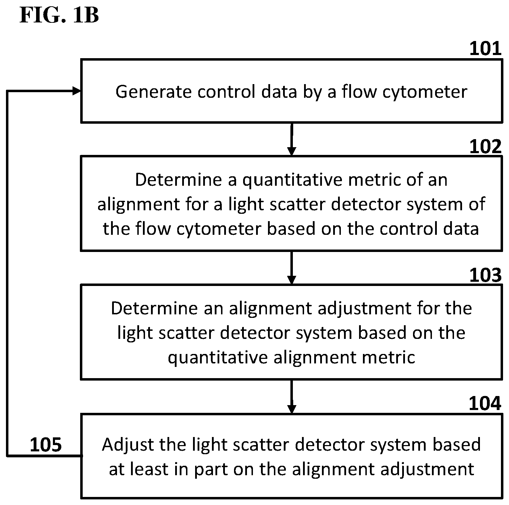

**FIG. 1B** presents a flow diagram for practicing methods of determining an alignment adjustment for a light scatter detector system of a flow cytometer according to certain embodiments of the disclosure. **FIG. 1B** includes the same elements as **FIG. 1A** with the addition of adjusting the light scatter detector system based at least in part on the alignment adjustment in step **104** and performing one or more of steps **101-104** again (arrow **105).** Adjusting the light scatter detector system (step **104)** may include performing a software alignment adjustment and/or a hardware alignment adjustment. In some embodiments, after the light scatter detector system is adjusted in step **104,** additional control data is generated in order to determine another quantitative alignment metric. In some cases, the new quantitative alignment metric is not within a threshold value of a predetermined alignment metric value and steps **103** and **104** may be performed again using the new quantitative alignment metric. In other cases, the new quantitative alignment metric is within a threshold value of a predetermined alignment metric value. In these instances, the new quantitative alignment metric may be saved in order to, e.g., normalize data that is subsequently obtained from a biological sample using the aligned light scatter detector system.

### Performing Alignment Adjustments

As described above, the methods of the disclosure may further include adjusting the light scatter detector system based at least in part on a determined alignment adjustment (e.g., as described above and herein). In some embodiments, the adjusting is performed manually by a user. In other embodiments, the adjusting is performed automatically via a computer.

In some embodiments, adjusting the light scatter detector system includes performing a software alignment adjustment. In these instances, the software alignment adjustment may include adjusting a collection angle calibration value, a trigger threshold value, a trigger channel option, a detector setting option, a pulse processing option, or any combination thereof. In some embodiments, the software alignment adjustment includes adjusting a collection angle calibration value. For example, as, e.g., the collection angle of a detector determines the amount or intensity of scattered light received by the detector, the collection angle of a detector may be determined in order to calibrate the detector. In some embodiments, the software alignment adjustment includes adjusting a trigger threshold value. In these embodiments, the trigger threshold value may be that of a flow cytometer gate used for sorting. As used herein, a "gate" generally refers to a classifier boundary (including, e.g., a threshold) identifying a subset of data of interest. In other words, a gate is a numerical or graphical boundary that can be used to define the characteristics of particles to include for further analysis. In flow cytometry, a gate may bound a group of events or data points of particular interest. The boundaries (i.e., thresholds) of a flow cytometry gate may be defined by a set of vertices or coordinates within the data space of a data set (e.g., the data space of the portion of the flow cytometry data). In some embodiments, the software alignment adjustment includes adjusting a trigger channel option such as, e.g., the channel of a flow cytometer used to trigger a sort decision.

In some embodiments, adjusting the light scatter detector system includes performing a hardware alignment adjustment. In these instances, the hardware alignment adjustment may include adjusting a position and/or orientation of an optical adjustment component of the flow cytometer. By "optical adjustment" is meant that light is changed or adjusted when propagated through the component. For example, the optical adjustment component may collimate a light beam, change the profile of a light beam, change the focus of a light beam, change the direction of light beam propagation, etc. Optical adjustment components may be any convenient device or structure which provides the desired change or adjustment and may include, but is not limited to, lenses, mirrors, beam splitters, collimating lenses, apertures, pinholes, slits, gratings, light refractors, and any combinations thereof. The optical adjustment component may be a component of the optical path of a given scatter detector such as, e.g., a light collection component used to collect light for the scatter detector. For example, the hardware alignment adjustment may include adjusting the position and/or orientation of an aperture and/or a filter used to collect light for the FSC or SSC detectors of the light scatter detector system. In some embodiments, the hardware alignment adjustment includes adjusting a position and/or orientation of a light scatter detector of the light scatter detector system. In some embodiments, the hardware alignment adjustment includes adjusting the setting of an optical adjustment component such as, e.g., the size of an aperture used to collect light for one or more scatter detectors.

In some embodiments, the position and/or orientation of a light scatter detector and/or optical adjustment component is adjusted using configurable or adjustable stages such as, e.g., an electronically adjustable (via, e.g., electric motor) x-stage, y-stage, and/or z-stage. In some embodiments, each collection path of the light scatter detector system (e.g., an FSC path and an SSC path) is separate, and each separate path is mounted on electronically adjustable x-y-z-stages. For example, FSC and SSC detector optical paths may be separated from fluorescence collection, and each path may be mounted on electronically adjustable stages.

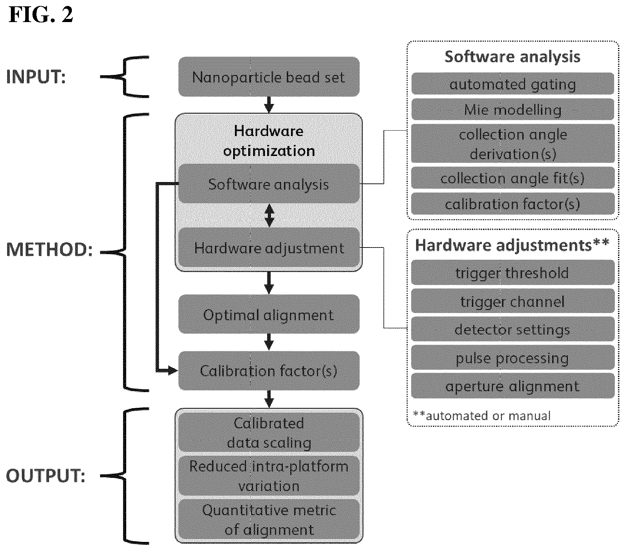

**FIG. 2** depicts a method of determining an alignment adjustment for a light scatter detector system of a flow cytometer in accordance with an embodiment of the disclosure. In **Fig. 2****,** a nanoparticle bead set is input into a flow cytometer system (including, e.g., a light scatter detection system) in order to generate control data. Software analysis is then performed on the control data, the software analysis including one or more of automated gating, Mie modelling, collection angle derivation(s), determining collection angle fit(s), determining calibration factor(s), etc. The calibration factors determined via software analysis may be used for calibrating data scaling, to reduce intra-platform variation, and/or to determine a quantitative metric of alignment. The software analysis may also be used to determine a hardware adjustment including, but not limited to, an adjustment of a trigger threshold, a trigger channel option, a detector setting, a pulse processing option, an aperture alignment, or any combination thereof. The hardware adjustments may be carried out or performed manually or automatically via, e.g., one or more of the electronically adjustable components described above or herein. In some cases, the hardware adjustment is performed in order to achieve optimal alignment of the light scatter detection system.

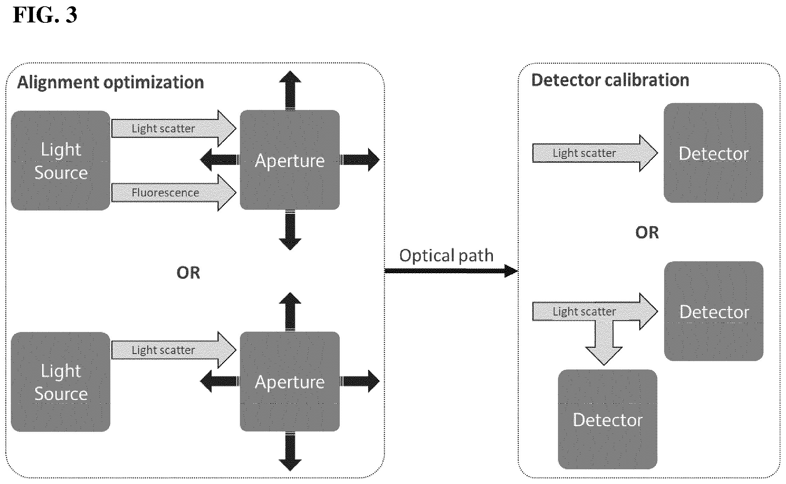

**FIG. 3** illustrates multiple methods of adjusting a light scatter detector system of a flow cytometer based on a determined alignment adjustment in accordance with an embodiment of the disclosure. In some cases, both scattered and fluorescent light is propagated through the same adjustable aperture, and the adjustable aperture is moved in order to optimize the alignment of both light scatter detectors and fluorescence detectors. In other instances, only scattered light is propagated through an adjustable aperture, and the adjustable aperture is moved in order to optimize the alignment of only light scatter detectors. In some embodiments, detector calibration is performed for each detector of the light scatter detector system separately. In other embodiments, light collection components (i.e., of a collection path of scattered light) transmit light to a plurality of light scatter detectors including, e.g., a first light scatter detector and a second light scatter detector having a higher sensitivity than the first light scatter detector. In these embodiments, detector calibration of the first light scatter detector may be performed based on data generated by the second light scatter detector.

### Flow Cytometry Methods

Methods in certain embodiments include data acquisition, analysis, and recording, such as with a computer, wherein multiple data channels record data from each detector for the light scatter and fluorescence emitted by each particle of a sample as it passes through the sample interrogation region of a flow cytometer. In these embodiments, analysis may include classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle. The data recorded for each particle is analyzed in real time or stored in a data storage and analysis means, such as a computer, as desired.

Methods of interest may additionally include sorting particles in a sample via a sorting flow cytometer based on the classification. Put another way, particles corresponding to flow cytometer data may be sorted into a series of collection vessels based on the status of classifications determined by the process described herein. For example, embodiments of the method include sorting particles associated with the set of flow cytometer data of a first classification into a first collection vessel, sorting particles associated with the set of flow cytometer data of a second classification into a second collection vessel, and so on. In certain instances, particles sorted may be considered "boundary" cases that cannot be neatly categorized but are likely to possess a sufficient number of particles of interest that it would be undesirable to discard them. Certain embodiments further include re-sorting the particles to obtain a higher yield of particles of interest.

Suitable collection vessels for collecting particles may include, but are not limited to: test tubes, conical tubes, multi-compartment vessels such as microtiter plates (e.g., 96-well plates), centrifuge tubes, culture tubes, microtubes, caps, cuvettes, bottles, rectilinear polymeric vessels, and bags, among other types of vessels. Particles may be sorted into any convenient number of collection vessels, such as 2 or more collection vessels, 3 or more collection vessels, 4 or more collection vessels, 5 or more collection vessels, 6 or more collection vessels, and including 7 or more collection vessels.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid, and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). **In** certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). **In** some instances, the subjects are humans. The methods may be applied to samples obtained from human subjects of both genders and at any stage of development (i.e., neonates, infant, juvenile, adolescent, adult), where in certain embodiments the human subject is a juvenile, adolescent, or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient parameter (e.g., cell surface marker or antigen) that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In certain embodiments, the sample data and/or control data (e.g., as discussed above) is obtained by performing a flow cytometric protocol. In practicing such methods, a sample or control beads (e.g., as described above) in a flow stream of a flow cytometer is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods of embodiments of the disclosure include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample and/or control beads with one or more lasers. As discussed above, the type and number of lasers will vary depending on the sample/beads as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample and/or control beads may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample and/or control beads in the flow stream with an array of lasers, such as an array having one or more gas lasers, one or more dye lasers and one or more solid-state lasers.

The sample and/or control beads may be irradiated with wavelengths ranging from 200 nm to 1500 nm, such as from 250 nm to 1250 nm, such as from 300 nm to 1000 nm, such as from 350 nm to 900 nm and from 400 nm to 800 nm. For example, where the light source is a broadband light source, the sample and/or control beads may be irradiated with wavelengths from 200 nm to 900 nm. In other instances, where the light source includes a plurality of narrow band light sources, the sample and/or control beads may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample and/or control beads is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample and/or control beads may be irradiated with the light sources simultaneously or sequentially, or a combination thereof. For example, the sample and/or control beads may be simultaneously irradiated with each of the light sources. **In** other embodiments, the flow stream is sequentially irradiated with each of the light sources. Where more than one light source is employed to irradiate the sample and/or control beads sequentially, the time each light source irradiates the sample and/or control beads may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample and/or control beads with the light source (e.g., laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 micro-seconds. In embodiments where the sample and/or control beads is sequentially irradiated with two or more light sources, the duration the sample and/or control beads is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where the sample and/or control beads is sequentially irradiated by more than two (i.e., 3 or more) light sources, the delay between irradiation by each light source may be the same or different.

The sample and/or control beads may be irradiated continuously or in discrete intervals. In some instances, methods include irradiating the sample and/or control beads with the light source continuously. In other instances, the sample and/or control beads is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample and/or control beads may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In certain instances, the sample and/or control beads may be irradiated with a plurality of angularly deflected beams of frequency-shifted light and a cell in the flow stream is imaged by fluorescence imaging using radiofrequency tagged emission (FIRE) to generate a frequency-encoded image, such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894 the disclosures of which are herein incorporated by reference.

In embodiments, light from the irradiated sample and/or control beads is conveyed to a light detection system and measured by one or more photodetectors. In practicing the subject methods, light from the sample and/or control beads is conveyed to three or more wavelength separators that are each configured to pass light having a predetermined spectral range. The spectral ranges of light from each of the wavelength separators are conveyed to one or more light detection modules having optical components that are configured to convey light having a predetermined sub-spectral range to the photodetectors.

Light may be measured with the light detection systems continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In certain embodiments, the light propagation is measured 2 or more times, with the data in certain instances being averaged.

In some embodiments, methods include adjusting the light before detecting the light with the subject light detection systems. For example, the light from the sample and/or control beads may be passed through one or more lenses, mirrors, pinholes, slits, gratings, light refractors, and any combination thereof. In some instances, the collected light is passed through one or more focusing lenses, such as to reduce the profile of the light directed to the light detection system or optical collection system as described above. In other instances, the emitted light from the sample and/or control beads is passed through one or more collimators to reduce light beam divergence conveyed to the light detection system.

### SYSTEMS

Aspects of the present disclosure further include systems, such as computer-controlled systems, for practicing embodiments of the above methods. Aspects of the systems include: a light scatter detector system configured to generate data signals from light received from an interrogation point of a flow cytometer; and a processor including memory operably coupled to the processor wherein the memory includes instructions stored thereon, which when executed by the processor, cause the processor to: generate control data by the flow cytometer; determine a quantitative metric of the alignment for the light scatter detector system based on the control data; and determine an alignment adjustment for the light scatter detector system based on the quantitative alignment metric.

In some embodiments, the processor includes instructions stored thereon, which when executed by the processor, further cause the processor to provide the alignment adjustment to a use. In some embodiments, the processor includes instructions stored thereon, which when executed by the processor, further cause the processor to adjust the light scatter detector system based at least in part on the alignment adjustment. In some embodiments, the processor may be configured to automatically perform the above-described alignment adjustment determining and adjustment performing methods. In some instances the systems further include one or more computers for complete automation or partial automation of the methods described herein. In some embodiments, systems include a computer having a computer readable storage medium with a computer program stored thereon.

In embodiments, the system includes an input module, a processing module, and an output module. The subject systems may include both hardware and software components, where the hardware components may take the form of one or more platforms, e.g., in the form of servers, such that the functional elements, i.e., those elements of the system that carry out specific tasks (such as managing input and output of information, processing information, etc.) of the system may be carried out by the execution of software applications on and across the one or more computer platforms represented of the system.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low-level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random-access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described including a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra-Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse, or touchscreen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone, or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located, or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

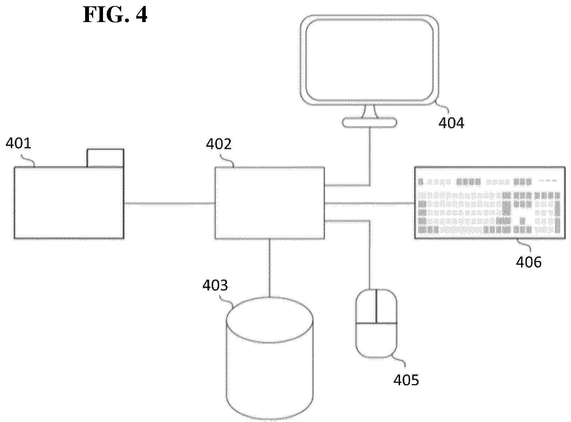

**FIG. 4** shows a functional block diagram for one example of a flow cytometer control system, such as a processor **402,** for analyzing and displaying biological events. A processor **402** can be configured to implement a variety of processes for controlling graphic display of biological events.

A flow cytometer or sorting system **401** can be configured to acquire biological event data. For example, a flow cytometer can generate flow cytometric event data. The flow cytometer **401** can be configured to provide biological event data to the processor **402.** A data communication channel can be included between the flow cytometer or sorting system **401** and the processor **402.** The biological event data can be provided to the processor **402** via the data communication channel.

The processor **402** can be configured to receive biological event data from the flow cytometer or sorting system **401.** The biological event data received from the flow cytometer or sorting system **401** can include flow cytometric event data. The processor **402** can be configured to provide a graphical display including a first plot of biological event data to a display device **404.** The processor **402** can be further configured to render a region of interest as a gate around a population of biological event data shown by the display device **404,** overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The processor **402** can be further configured to display the biological event data on the display device **404** within the gate differently from other events in the biological event data outside of the gate. For example, the processor **402** can be configured to render the color of biological event data contained within the gate to be distinct from the color of biological event data outside of the gate. The display device **404** can be implemented as a monitor, a tablet computer, a smartphone, or other electronic device configured to present graphical interfaces.

The processor **402** can be configured to receive a gate selection signal identifying the gate from a first input device. For example, the first input device can be implemented as a mouse **405.** The mouse **405** can initiate a gate selection signal to the processor **402** identifying the gate to be displayed on or manipulated via the display device **404** (e.g., by clicking on or in the desired gate when the cursor is positioned there). In some implementations, the first device can be implemented as the keyboard **406** or other means for providing an input signal to the processor **402** such as a touchscreen, a stylus, an optical detector, or a voice recognition system. Some input devices can include multiple inputting functions. In such implementations, the inputting functions can each be considered an input device. For example, as shown in **FIG. 4****,** the mouse **405** can include a right mouse button and a left mouse button, each of which can generate a triggering event. The triggering event can cause the processor **402** to alter the manner in which the data is displayed, which portions of the data is actually displayed on the display device **404,** and/or provide input to further processing such as selection of a population of interest for particle sorting.

In some embodiments, the processor **402** can be configured to detect when gate selection is initiated by the mouse **405.** The processor **402** can be further configured to automatically modify plot visualization to facilitate the gating process. The modification can be based on the specific distribution of biological event data received by the processor **402.**

The processor **402** can be connected to a storage device **403.** The storage device **403** can be configured to receive and store biological event data from the processor **402.** The storage device **403** can also be configured to receive and store flow cytometric event data from the processor **402.** The storage device **403** can be further configured to allow retrieval of biological event data, such as flow cytometric event data, by the processor **402.**

A display device **404** can be configured to receive display data from the processor **402.** The display data can include plots of biological event data and gates outlining sections of the plots. The display device **404** can be further configured to alter the information presented according to input received from the processor **402** in conjunction with input from the flow cytometer **401,** the storage device **403,** the keyboard **406,** and/or the mouse **405.**

In some implementations, the processor **402** can generate a user interface to receive example events for sorting. For example, the user interface can include a control for receiving example events or example images. The example events or images or an example gate can be provided prior to collection of event data for a sample and/or control beads, or based on an initial set of events for a portion of the sample and/or control beads.

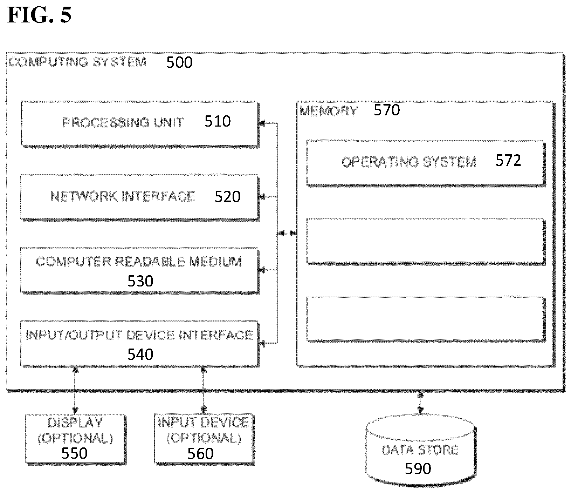

**FIG. 5** depicts a general architecture of an example computing device **500** according to certain embodiments. The general architecture of the computing device **500** depicted in **FIG. 5** includes an arrangement of computer hardware and software components. It is not necessary, however, that all of these generally conventional elements be shown in order to provide an enabling disclosure. As illustrated, the computing device **500** includes a processing unit **510,** a network interface **520,** a computer readable medium drive **530,** an input/output device interface **540,** a display **550,** and an input device **560,** all of which may communicate with one another by way of a communication bus. The network interface **520** may provide connectivity to one or more networks or computing systems. The processing unit **510** may thus receive information and instructions from other computing systems or services via a network. The processing unit **510** may also communicate to and from memory **570** and further provide output information for an optional display **550** via the input/output device interface **540.** For example, an analysis software (e.g., data analysis software or program such as FlowJo^{®}) stored as executable instructions in the non-transitory memory of the analysis system can display the flow cytometry event data to a user. The input/output device interface **540** may also accept input from the optional input device **560,** such as a keyboard, mouse, digital pen, microphone, touch screen, gesture recognition system, voice recognition system, gamepad, accelerometer, gyroscope, or other input device.

The memory **570** may contain computer program instructions (grouped as modules or components in some embodiments) that the processing unit **510** executes in order to implement one or more embodiments. The memory **570** generally includes RAM, ROM and/or other persistent, auxiliary, or non-transitory computer-readable media. The memory **570** may store an operating system **572** that provides computer program instructions for use by the processing unit **510** in the general administration and operation of the computing device **500.** Data may be stored in data storage device **590.** The memory **570** may further include computer program instructions and other information for implementing aspects of the present disclosure.

In some embodiments, the system includes a particle analyzer. In certain embodiments, the particle analyzer is a flow cytometer. Flow cytometers of interest may include a flow cell for transporting particles in a flow stream, a light source for irradiating the particles in the flow stream at an interrogation point, and a particle-modulated light detector for detecting particle-modulated light. In some cases, the flow cytometer is a full spectrum flow cytometer.

As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample and/or control beads injected from a sample tube. Flow cells of interest include a light-accessible flow channel. In some instances, the flow cell includes transparent material (e.g., quartz) that permits the passage of light therethrough. In some embodiments, the flow cell is a stream-in-air flow cell in which light interrogation of the particles occurs outside of the flow cell (i.e., in free space).

In some cases, the flow stream is configured for irradiation with light from a light source at an interrogation point. The flow stream for which the flow channel is configured may include a liquid sample and/or control beads injected from a sample tube. In certain embodiments, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 µm represents the axis of light emitted by the light source, the interrogation point may range from -100 µm to 100 µm, such as -50 µm to 50 µm, such as -25 µm to 40 µm, and including -15 µm to 30 µm.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

As discussed above, aspects of the disclosure also include a light source configured to irradiate particles passing through the flow cell at an interrogation point. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulium YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols, and combinations thereof. In certain embodiments, flow cytometers of interest include one or more focusing lenses. The focusing lens, in one example, may be a de-magnifying lens. In still other embodiments, flow cytometers of interest include fiber optics.

Where the optical adjustment component is configured to move, the optical adjustment component may be configured to be moved continuously or in discrete intervals, such as for example in 0.01 µm or greater increments, such as 0.05 µm or greater, such as 0.1 µm or greater, such as 0.5 µm or greater such as 1 µm or greater, such as 10 µm or greater, such as 100 µm or greater, such as 500 µm or greater, such as 1 mm or greater, such as 5 mm or greater, such as 10 mm or greater and including 25 mm or greater increments.

Any displacement protocol may be employed to move the optical adjustment component structures, such as coupled to a moveable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90-degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser, and a 635 nm laser.

As discussed above, flow cytometers of interest may further include one or more particle-modulated light detectors for detecting particle-modulated light intensity data. In some embodiments, the particle-modulated light detector(s) include one or more forward-scattered light detectors configured to detect forward-scattered light. For example, the subject flow cytometers may include 1 forward-scattered light detector or multiple forward-scattered light detectors, such as 2 or more, such as 3 or more, such as 4 or more, and including 5 or more. In certain embodiments, flow cytometers include 1 forward-scattered light detector. In other embodiments, flow cytometers include 2 forward-scattered light detectors.

Any convenient detector for detecting collected light may be used in the forward-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In additional embodiments, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device, and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample and/or control beads in the flow stream at 400 or more different wavelengths. In some embodiments, 2 or more detectors in the flow cytometers as described herein are configured to measure the same or overlapping wavelengths of collected light.

In some embodiments, fluorescent light detectors of interest are configured to measure collected light over a range of wavelengths (e.g., 200 nm - 1000 nm). **In** certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample and/or control beads in the flow stream at one or more specific wavelengths. For example, flow cytometers may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm, and any combinations thereof. In certain embodiments, one or more detectors may be configured to be paired with specific fluorophores, such as those used with the sample in a fluorescence assay.

In some embodiments, flow cytometers include one or more wavelength separators positioned between the flow cell and the particle-modulated light detector(s). The term "wavelength separator" is used herein in its conventional sense to refer to an optical component that is configured to separate light collected from the sample and/or control beads into predetermined spectral ranges. In some embodiments, flow cytometers include a single wavelength separator. In other embodiments, flow cytometers include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample and/or control beads into predetermined spectral ranges by passing light having a predetermined spectral range and reflecting one or more remaining spectral ranges of light. In other embodiments, the wavelength separator is configured to separate light collected from the sample and/or control beads into predetermined spectral ranges by passing light having a predetermined spectral range and absorbing one or more remaining spectral ranges of light. In yet other embodiments, the wavelength separator is configured to spatially diffract light collected from the sample and/or control beads into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6BD, FACSDiscover^{™} S8 Cell Sorter cell sorter or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In certain instances, flow cytometry systems of the disclosure are configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894 the disclosures of which are herein incorporated by reference. In such instances, flow cytometric data may include image data of particles, e.g., cells present in the sample. See, e.g., Schraivogel et al., Science Vol. 375(6578); 315-320 (2022), the disclosure of which is incorporated herein in its entirety, as well as U.S. Provisional Patent Application Serial No. 63/256,974, ), the disclosure of which is incorporated herein in its entirety. An example of such a system is FACSDiscover^{™} S8 Cell Sorter cell sorter.

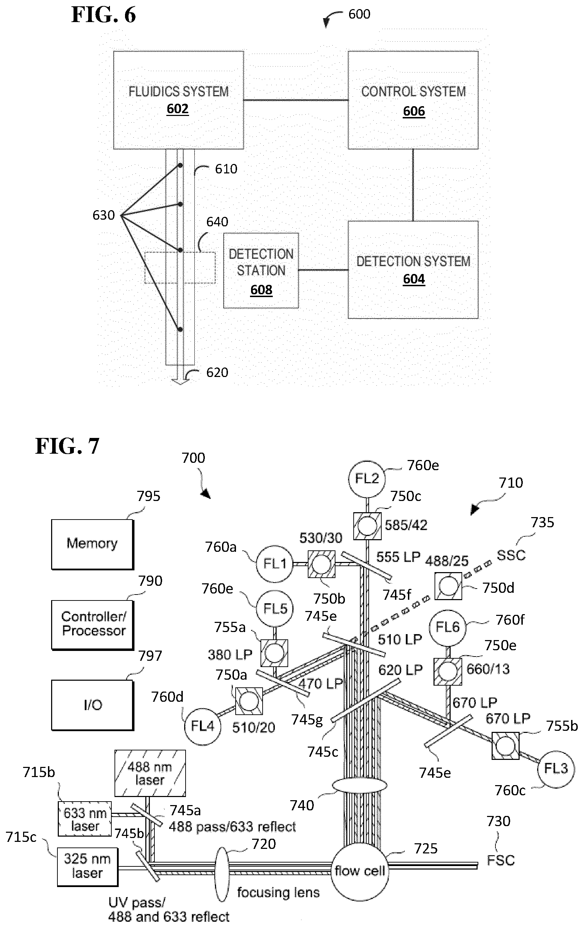

In some embodiments, systems are flow cytometers where the flow cytometry system **600 (****FIG. 6****)** can be used to analyze and characterize particles, with or without physically sorting the particles into collection vessels. **FIG.** 6 shows a functional block diagram of a flow cytometry system for computational based sample analysis and particle characterization. In some embodiments, the flow cytometry system **600** is a flow system. The flow cytometry system **600** shown in **FIG. 6** can be configured to perform, in whole or in part, the methods described herein. The flow cytometry system **600** includes a fluidics system **602.** The fluidics system **602** can include or be coupled with a sample tube **610** and a moving fluid column within the sample tube in which particles **630** (e.g., cells) of a sample move along a common sample path **620.**

The flow cytometry system **600** includes a detection system **604** configured to collect a signal from each particle as it passes one or more detection stations along the common sample path. A detection station **608** generally refers to a monitored area **640** of the common sample path. Detection can, in some implementations, include detecting light or one or more other properties of the particles **630** as they pass through the monitored area **640.** In **FIG. 6****,** one detection station **608** with one monitored area **640** is shown. Some implementations of the flow cytometry system **600** can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system **604** is configured to collect a succession of such data points in a first-time interval.

The flow cytometry system **600** can also include a control system **606.** The control system **606** can include one or more processors, an amplitude control circuit and/or a frequency control circuit. The control system shown can be operationally associated with the fluidics system **602.** The control system can be configured to generate a calculated signal frequency for at least a portion of the first-time interval based on a Poisson distribution and the number of data points collected by the detection system **604** during the first time interval. The control system **606** can be further configured to generate an experimental signal frequency based on the number of data points in the portion of the first-time interval. The control system **606** can additionally compare the experimental signal frequency with that of a calculated signal frequency or a predetermined signal frequency.

**FIG. 7** shows a system **700** for flow cytometry in accordance with an illustrative embodiment of the present invention. The system **700** includes a flow cytometer **710,** a controller/processor **790** and a memory **795.** The flow cytometer **710** includes one or more excitation lasers **715a-715c,** a focusing lens **720,** a flow chamber **725,** a forward scatter detector **730,** a side scatter detector **735,** a fluorescence collection lens **740,** one or more beam splitters **745a-745g,** one or more bandpass filters **750a-750e,** one or more longpass ("LP") filters **755a-755b,** and one or more fluorescent detectors **760a-760f.**

The excitation lasers **715a-715c** emit light in the form of a laser beam. The wavelengths of the laser beams emitted from excitation lasers **715a-715c** are 488 nm, 633 nm, and 325 nm, respectively, in the example system of **FIG. 7****.** The laser beams are first directed through one or more of beam splitters **745a** and **745b.** Beam splitter **745a** transmits light at 488 nm and reflects light at 633 nm. Beam splitter **745b** transmits UV light (light with a wavelength in the range of 10 to 400 nm) and reflects light at 488 nm and 633 nm.

The laser beams are then directed to a focusing lens **720,** which focuses the beams onto the portion of a fluid stream where particles of a sample and/or control beads are located, within the flow chamber **725.** The flow chamber is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more of the forward scatter detector **730,** the side scatter detector **735,** and the one or more fluorescent detectors **760a-760f** through one or more of the beam splitters **745a-745g,** the bandpass filters **750a-750e,** the longpass filters **755a-755b,** and the fluorescence collection lens **740.**

The fluorescence collection lens **740** collects light emitted from the particle- laser beam interaction and routes that light towards one or more beam splitters and filters. Bandpass filters, such as bandpass filters **750a-750e,** allow a narrow range of wavelengths to pass through the filter. For example, bandpass filter **750a** is a 510/20 filter. The first number represents the center of a spectral band. The second number provides a range of the spectral band. Thus, a 510/20 filter extends 10 nm on each side of the center of the spectral band, or from 500 nm to 520 nm. Shortpass filters transmit wavelengths of light equal to or shorter than a specified wavelength. Longpass filters, such as longpass filters **755a-755b,** transmit wavelengths of light equal to or longer than a specified wavelength of light. For example, longpass filter **755a,** which is a 670 nm longpass filter, transmits light equal to or longer than 670 nm. Filters are often selected to optimize the specificity of a detector for a particular fluorescent dye. The filters can be configured so that the spectral band of light transmitted to the detector is close to the emission peak of a fluorescent dye.

Beam splitters direct light of different wavelengths in different directions. Beam splitters can be characterized by filter properties such as shortpass and longpass. For example, beam splitter **745g** is a 620 SP beam splitter, meaning that the beam splitter **745g** transmits wavelengths of light that are 620 nm or shorter and reflects wavelengths of light that are longer than 620 nm in a different direction. In one embodiment, the beam splitters **745a-745g** can comprise optical mirrors, such as dichroic mirrors.

The forward scatter detector **730** is positioned slightly off axis from the direct beam through the flow cell and is configured to detect diffracted light, the excitation light that travels through or around the particle in mostly a forward direction. The intensity of the light detected by the forward scatter detector is dependent on the overall size of the particle. The forward scatter detector can include a photodiode. The side scatter detector **735** is configured to detect refracted and reflected light from the surfaces and internal structures of the particle, and tends to increase with increasing particle complexity of structure. The fluorescence emissions from fluorescent molecules associated with the particle can be detected by the one or more fluorescent detectors **760a-760f.** The side scatter detector **735** and fluorescent detectors can include photomultiplier tubes. The signals detected at the forward scatter detector **730,** the side scatter detector **735** and the fluorescent detectors can be converted to electronic signals (voltages) by the detectors. This data can provide information about the sample.

One of skill in the art will recognize that a flow cytometer in accordance with an embodiment of the present invention is not limited to the flow cytometer depicted in **FIG. 7****,** but can include any flow cytometer known in the art. For example, a flow cytometer may have any number of lasers, beam splitters, filters, and detectors at various wavelengths and in various different configurations.

In operation, cytometer operation is controlled by a controller/processor **790,** and the measurement data from the detectors can be stored in the memory **795** and processed by the controller/processor **790.** Although not shown explicitly, the controller/processor **790** is coupled to the detectors to receive the output signals therefrom, and may also be coupled to electrical and electromechanical components of the flow cytometer **700** to control the lasers, fluid flow parameters, and the like. Input/output (I/O) capabilities **797** may be provided also in the system. The memory **795,** controller/processor **790,** and I/O **797** may be entirely provided as an integral part of the flow cytometer **710.** In such an embodiment, a display may also form part of the I/O capabilities **797** for presenting experimental data to users of the cytometer **700.** Alternatively, some or all of the memory **795** and controller/processor **790** and I/O capabilities may be part of one or more external devices such as a general-purpose computer. In some embodiments, some, or all of the memory **795** and controller/processor **790** can be in wireless or wired communication with the cytometer **710.** The controller/processor **790** in conjunction with the memory **795** and the I/O **797** can be configured to perform various functions related to the preparation and analysis of a flow cytometer experiment.

The system illustrated in **FIG. 7** includes six different detectors that detect fluorescent light in six different wavelength bands (which may be referred to herein as a "filter window" for a given detector) as defined by the configuration of filters and/or splitters in the beam path from the flow cell **725** to each detector. Different fluorescent molecules used for a flow cytometer experiment will emit light in their own characteristic wavelength bands. The particular fluorescent labels used for an experiment and their associated fluorescent emission bands may be selected to generally coincide with the filter windows of the detectors. However, as more detectors are provided, and more labels are utilized, perfect correspondence between filter windows and fluorescent emission spectra is not possible. It is generally true that although the peak of the emission spectra of a particular fluorescent molecule may lie within the filter window of one particular detector, some of the emission spectra of that label will also overlap the filter windows of one or more other detectors. This may be referred to as spillover. The I/O **797** can be configured to receive data regarding a flow cytometer experiment having a panel of fluorescent labels and a plurality of cell populations having a plurality of markers, each cell population having a subset of the plurality of markers. The I/O **797** can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory **795.** The controller/processor **790** can be configured to evaluate one or more assignments of labels to markers.

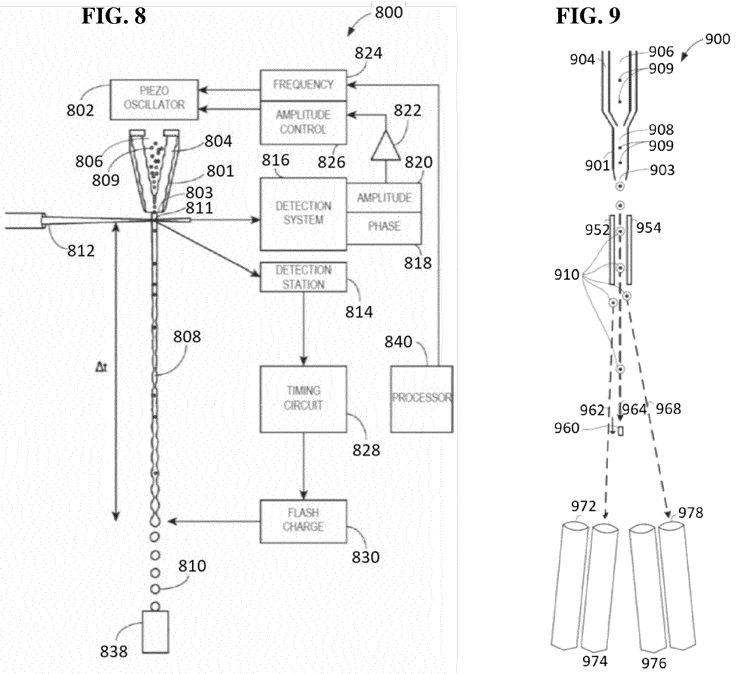

**FIG. 8** is a schematic drawing of a particle sorter system **800** (e.g., a sorting system of a flow cytometer) in accordance with one embodiment presented herein. In some embodiments, the particle sorter system **800** is a cell sorter system. As shown in **FIG. 8****,** a drop formation transducer **802** (e.g., piezo-oscillator) is coupled to a fluid conduit **801,** which can be coupled to, can include, or can be, a nozzle **803.** Within the fluid conduit **801,** sheath fluid **804** hydrodynamically focuses a sample fluid **806** including particles **809** into a moving fluid column **808** (e.g., a stream). Within the moving fluid column **808,** particles **809** (e.g., cells) are lined up in single file to cross a monitored area **811** (e.g., where laser-stream intersect), irradiated by an irradiation source **812** (e.g., a laser). Vibration of the drop formation transducer **802** causes moving fluid column **808** to break into a plurality of drops **810,** some of which contain particles **809.**

In operation, a detection station **814** (e.g., an event detector) identifies when a particle of interest (or cell of interest) crosses the monitored area **811.** Detection station **814** feeds into a timing circuit **828,** which in turn feeds into a flash charge circuit **830.** At a drop break off point, informed by a timed drop delay (Δt), a flash charge can be applied to the moving fluid column **808** such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 8****,** the drops can be collected in a drain receptacle **838.**

A detection system **816** (e.g., a drop boundary detector) serves to automatically determine the phase of a drop drive signal when a particle of interest passes the monitored area **811.** An exemplary drop boundary detector is described in U.S. Pat. No. 7,679,039, which is incorporated herein by reference in its entirety. The detection system **816** allows the instrument to accurately calculate the place of each detected particle in a drop. The detection system **816** can feed into an amplitude signal **820** and/or phase **818** signal, which in turn feeds (via amplifier **822)** into an amplitude control circuit **826** and/or frequency control circuit **824.** The amplitude control circuit **826** and/or frequency control circuit **824,** in turn, controls the drop formation transducer **802.** The amplitude control circuit **826** and/or frequency control circuit **824** can be included in a control system.

In some implementations, sort electronics (e.g., the detection system **816,** the detection station **814** and a processor **840)** can be coupled with a memory configured to store the detected events and a sort decision based thereon. The sort decision can be included in the event data for a particle. In some implementations, the detection system **816** and the detection station **814** can be implemented as a single detection unit or communicatively coupled such that an event measurement can be collected by one of the detection system **816** or the detection station **814** and provided to the non-collecting element.

**FIG. 9** is a schematic drawing of a particle sorter system, in accordance with one embodiment presented herein. The particle sorter system **900** shown in **FIG. 91,** includes deflection plates **952** and **954.** A charge can be applied via a stream-charging wire in a barb. This creates a stream of droplets **910** containing particles **910** for analysis. The particles can be illuminated with one or more light sources (e.g., lasers) to generate light scatter and fluorescence information. The information for a particle is analyzed such as by sorting electronics or other detection system (not shown in **FIG. 9****).** The deflection plates **952** and **954** can be independently controlled to attract or repel the charged droplet to guide the droplet toward a destination collection receptacle (e.g., one of **972, 974, 976,** or **978).** As shown in **FIG. 9****,** the deflection plates **952** and **954** can be controlled to direct a particle along a first path **962** toward the receptacle **974** or along a second path **968** toward the receptacle **978.** If the particle is not of interest (e.g., does not exhibit scatter or illumination information within a specified sort range), deflection plates may allow the particle to continue along a flow path **964.** Such uncharged droplets may pass into a waste receptacle such as via aspirator **970.**

The sorting electronics can be included to initiate collection of measurements, receive fluorescence signals for particles, and determine how to adjust the deflection plates to cause sorting of the particles. Example implementations of the embodiment shown in **FIG. 9** include the BD FACSAria^{™} line of flow cytometers commercially provided by Becton, Dickinson and Company (Franklin Lakes, NJ).

In some embodiments, particle sorting systems of interest are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, the disclosure of which is incorporated herein by reference. In some embodiments, the subject systems include a particle sorting module having deflector plates, such as described in U.S. Patent Publication No. 2017/0299493, filed on March 28, 2017, the disclosure of which is incorporated herein by reference.

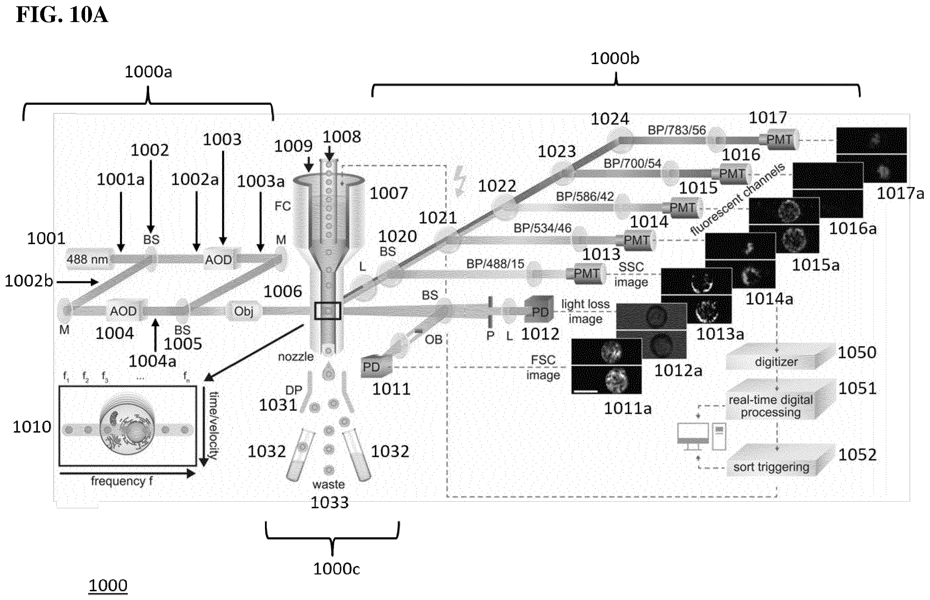

In certain embodiments, systems include a fluorescence imaging using radiofrequency tagged emission image-enabled particle sorter, such as depicted in **FIG. 10A****.** Particle sorter **1000** includes a light irradiation component **1000a** which includes light source **1001** (e.g., 488 nm laser) which generates output beam of light **1001a** that is split with beamsplitter **1002** into beams **1002a** and **1002b.** Light beam **1002a** is propagated through acousto-optic device (e.g., an acousto-optic deflector, AOD) **1003** to generate an output beam **1003a** having one or more angularly deflected beams of light. In some instances, output beam **1003a** generated from acousto-optic device **1003** includes a local oscillator beam and a plurality of radiofrequency comb beams. Light beam **1002b** is propagated through acousto-optic device (e.g., an acousto-optic deflector, AOD) **1004** to generate an output beam **1004a** having one or more angularly deflected beams of light. In some instances, output beam **1004a** generated from acousto-optic device **1004** includes a local oscillator beam and a plurality of radiofrequency comb beams. Output beams **1003a** and **1004a** generated from acousto-optic devices **1003** and **1004,** respectively are combined with beamsplitter **1005** to generate output beam **1005a** which is conveyed through an optical component **1006** (e.g., an objective lens) to irradiate particles in flow cell **1007.** In certain embodiments, acousto-optic device **1003** (AOD) splits a single laser beam into an array of beamlets, each having different optical frequency and angle. Second AOD **1004** tunes the optical frequency of a reference beam, which is then overlapped with the array of beamlets at beam combiner **1005.** In certain embodiments, the light irradiation system having a light source and acousto-optic device can also include those described in Schraivogel, et al. ("High-speed fluorescence image-enabled cell sorting," Science (2022), 375 (6578): 305-320) and United States Patent Publication No. 2021/0404943, the disclosure of which is herein incorporated by reference.

Output beam **1005a** irradiates sample particles **1008** propagating through flow cell 1007 (e.g., with sheath fluid **1009)** at irradiation region **1010.** As shown in irradiation region **1010,** a plurality of beams (e.g., angularly deflected radiofrequency shifted beams of light depicted as dots across irradiation region **1010)** overlaps with a reference local oscillator beam (depicted as the shaded line across irradiation region **1010).** Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system **1000b** that includes a plurality of photodetectors. Light detection system **1000b** includes forward scattered light photodetector **1011** for generating forward scatter images **1011a** and a side scattered light photodetector **1012** for generating side scatter images **1012a.** Light detection system **1000b** also includes brightfield photodetector **1013** for generating light loss images **1013a.** In some embodiments, forward scatter detector **1011** and side scatter detector **1012** are photodiodes (e.g., avalanche photodiodes, APDs). In some instances, brightfield photodetector **1013** is a photomultiplier tube (PMT). Fluorescence from the irradiated sample is also detected with fluorescence photodetectors **1014-1017.** In some instances, photodetectors **1014-1017** are photomultiplier tubes. Light from the irradiated sample is directed to the side scatter detection channel **1012** and fluorescence detection channels **1014-1017** through beamsplitter **1020.** Light detection system **1000b** includes bandpass optical components **1021, 1022, 1023** and **1024** (e.g., dichroic mirrors) for propagating predetermined wavelength of light to photodetectors **1014-1017.** In some instances, optical component **1021** is a 534 nm/40 nm bandpass. In some instances, optical component **1022** is a 586 nm/42 nm bandpass. In some instances, optical component **1023** is a 700 nm/54 nm bandpass. In some instances, optical component **1024** is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels **1011** and **1012,** brightfield light detection channel **1013** and fluorescence detection channels **1014-1017** are processed by real-time digital processing with processors **1050** and **1051.** Images **1011a-1017a** can be generated in each light detection channel based on the data signals generated in processors **1050** and **1051.** Image-enabled sorting is performed in response to a sort signal generated in sort trigger **1052.** Sorting component **1000c** includes deflection plates **1031** for deflecting particles into sample containers **1032** or to waste stream **1033.** In some instances, sort component **1000c** is configured to sort particles with an enclosed particle sorting module, such as those described in U.S. Patent Publication No. 2017/0299493, filed on March 28, 2017, the disclosure of which is incorporated herein by reference. In certain embodiments, sorting component **1000c** includes a sort decision module having a plurality of sort decision units, such as those described in U.S. Patent Publication No. 2020/0256781, the disclosure of which is incorporated herein by reference.

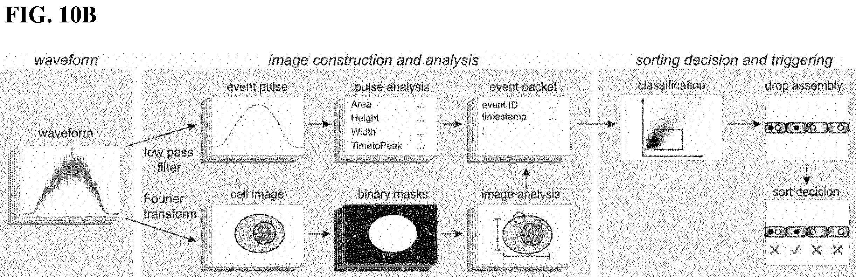

**Figure 10B** depicts image-enabled particle sorting data processing according to certain embodiments. In some instances, image-enabled particle sorting data processing is a low-latency data processing pipeline. Each photodetector produces a pulse with high-frequency modulations encoding the image (waveform). Fourier analysis is performed to reconstruct the image from the modulated pulse. An image processing pipeline produces a set of image features (image analysis), which are combined with features derived from a pulse processing pipeline (event packet). Real-time sort classification electronics then classify the particle based on image features, producing a sort decision that is used to selectively charge the droplets.

### NON-TRANSITORY COMPUTER-READABLE STORAGE MEDIA

Aspects of the present disclosure further include non-transitory computer readable storage mediums having instructions for practicing the subject methods. Computer readable storage mediums may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, flash drive, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Java, Python, Visual Basic, and C++, as well as many others.

In some embodiments, computer readable storage media of interest include a computer program stored thereon, where the computer program when loaded on the computer includes instructions for (e.g., automatically) determining an alignment adjustment for a light scatter detector system of a flow cytometer by: generating control data by the flow cytometer; determining a quantitative metric of the alignment for the light scatter detector system based on the control data; and determining the alignment adjustment for the light scatter detector system based on the quantitative alignment metric, e.g., as described above and herein. In some embodiments, the computer program when loaded on the computer further includes instructions for adjusting the light scatter detector system based at least in part on the determined alignment adjustment, e.g., as described above and herein.

### KiTs

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for determining an alignment adjustment for a light scatter detector system of a flow cytometer, e.g., as described above and herein. In embodiments, the program storage media include instructions for adjusting the light scatter detector system based at least in part on the determined alignment adjustment, e.g., as described above and herein. In some embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In some embodiments, the subject kits may include, e.g., a set of submicron standard/control beads for determining the alignment adjustment as described above and herein. In some cases, the beads may include four or more different sizes of beads and have a diameter of 50 nm to 2000 nm. In some embodiments, the control beads include polystyrene. In some instances, the control beads include fluorescent beads. For example, the control beads may include seven different types of beads: six different sizes of polystyrene beads having a diameter of 100 nm to 1200 nm and one fluorescent bead. In some embodiments, the subject kits may include the set of beads for determining the alignment adjustment and the program storage media including instructions, e.g., as described above and herein.

In addition to the above components, the subject kits may further include (in some embodiments) instructions, e.g., for installing the plugin to the existing software package. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, 5 on which the information has been recorded. Yet another form of these instructions that may be present is a website address which may be used via the internet to access the information at a removed site.

### UTILITY

The methods and systems find use in a variety of applications where it is desirable to analyze and, optionally, sort particle components in a sample in a fluid medium, such as a biological sample, and then store sorted products, e.g., for later use, such as therapeutic use. The present disclosure particularly finds use where it is desirable to determine an alignment adjustment for a light scatter detector system of a flow cytometer and, e.g., perform the alignment adjustment. Embodiments of the disclosure also find use where it is desirable to provide a flow cytometer with improved cell sorting accuracy, enhanced particle collection, particle charging efficiency, more accurate particle charging and enhanced particle deflection during cell sorting.

The subject methods and systems find use in applications where it is desirable to reduce variations across different flow cytometers and/or compare data generated by different flow cytometers. Embodiments of the disclosure also find use where it is desirable identify extracellular vesicles or specific cell populations of a biological sample and/or derive a diameter or a refractive index for a small particle of a sample.

The subject methods and systems find use in a variety of applications where cell analysis of a biological sample may be desired for research, laboratory testing, or for use in therapy. In some embodiments, the subject systems and methods facilitate analysis of cells obtained from fluidic or tissue samples such as, e.g., specimens for diseases, including but not limited to cancer. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy. Methods and systems of the present disclosure allow for separating and collecting cells from a biological sample (e.g., organ, tissue, tissue fragment, fluid) with enhanced efficiency and low cost as compared to traditional flow cytometry systems.

Notwithstanding the appended claims, the disclosure is also defined by the following clauses:1. A method of determining an alignment adjustment for a light scatter detector system of a flow cytometer, the method comprising:
(a) generating control data by the flow cytometer;
(b) determining a quantitative metric of the alignment for the light scatter detector system based on the control data; and
(c) determining the alignment adjustment for the light scatter detector system based on the quantitative alignment metric.

2. The method according to clause 1, wherein determining the quantitative alignment metric comprises calculating a collection angle based on the control data.
3. The method according to clause 2, wherein the collection angle is calculated with respect to an interrogation point of the flow cytometer.
4. The method according to clause 2, wherein the collection angle is calculated using a light scattering model.
5. The method according to clause 4, wherein the light scattering model comprises a Mie light scatter model.
6. The method according to any one of clauses 1-5, wherein the light scatter detector system comprises a side scatter detector, a forward scatter detector, or both.
7. The method according to any one of clauses 1-6, wherein generating the control data comprises:
   i) irradiating a bead with the flow cytometer; and
   ii) measuring a data signal generated by the light scatter detector system.
8. The method according to clause 7, wherein the control data is generated for a plurality of beads, the plurality of beads comprising a first bead and a second bead larger than the first bead.
9. The method according to clause 8, wherein the plurality of beads have a diameter of 50 nm to 3000 nm.
10. The method according to clause 9, wherein the plurality of beads have a diameter of 100 nm to 1200 nm.
11. The method according to any one of clauses 8-10, wherein the plurality of beads comprise polystyrene.
12. The method according to any one of clauses 8-11, wherein the plurality of beads comprise fluorescent beads.
13. The method according to any one of clauses 1-12, further comprising providing the alignment adjustment to a user.
14. The method according to clause 13, wherein the alignment adjustment comprises a software alignment adjustment.
15. The method according to clause 14, wherein the software alignment adjustment comprises a collection angle calibration value, a trigger threshold value, a trigger channel option, a detector setting option, a pulse processing option, or any combination thereof.
16. The method according to clause 13, wherein the alignment adjustment comprises a hardware alignment adjustment.
17. The method according to clause 16, wherein the hardware alignment adjustment comprises an aperture adjustment distance, an aperture adjustment angle, a detector adjustment distance, a detector adjustment angle, or any combination thereof.
18. The method according to any one of clauses 1-17, further comprising adjusting the light scatter detector system based at least in part on the alignment adjustment.
19. The method according to clause 18, wherein adjusting the light scatter detector system comprises performing a software alignment adjustment.
20. The method according to clause 19, wherein the software alignment adjustment comprises adjusting a collection angle calibration value, a trigger threshold value, a trigger channel option, a detector setting option, a pulse processing option, or any combination thereof.
21. The method according to clause 18, wherein adjusting the light scatter detector system comprises performing a hardware alignment adjustment.
22. The method according to clause 21, wherein the hardware alignment adjustment comprises adjusting a position and/or orientation of an optical adjustment component of the flow cytometer.
23. The method according to clause 22, wherein the optical adjustment component is an aperture, a filter, or both.
24. The method according to any one of clauses 21-23, wherein the hardware alignment adjustment comprises adjusting a position and/or orientation of a light scatter detector of the light scatter detector system.
25. A system configured to perform the method according to any one of clauses 1-24.
26. A system comprising:
   a light scatter detector system configured to generate data signals from light received from an interrogation point of a flow cytometer; and
   a processor comprising memory operably coupled to the processor wherein the memory comprises instructions stored thereon, which when executed by the processor, cause the processor to analyze the control data to:
      (a) generating control data by the flow cytometer;
      (b) determining a quantitative metric of the alignment for the light scatter detector system based on the control data; and
      (c) determining the alignment adjustment for the light scatter detector system based on the quantitative alignment metric.
27. The system according to clause 26, wherein determining the quantitative alignment metric comprises calculating a collection angle based on the control data.
28. The system according to clause 27, wherein the collection angle is calculated with respect to the interrogation point of the flow cytometer.
29. The system according to clause 27, wherein the collection angle is calculated using a light scattering model.
30. The system according to clause 29, wherein the light scattering model comprises a Mie light scatter model.
31. The system according to any one of clauses 26-30, wherein the light scatter detector system comprises a side scatter detector, a forward scatter detector, or both.
32. The system according to any one of clauses 26-31, wherein generating the control data comprises:
   i) irradiating a bead with the flow cytometer; and
   ii) measuring a data signal generated by the light scatter detector system.
33. The system according to clause 32, wherein the control data is generated for a plurality of beads, the plurality of beads comprising a first bead and a second bead larger than the first bead.
34. The system according to clause 33, wherein the plurality of beads have a diameter of 50 nm to 3000 nm.
35. The system according to clause 34, wherein the plurality of beads have a diameter of 100 nm to 1200 nm.
36. The system according to any one of clauses 33-35, wherein the plurality of beads comprise polystyrene.
37. The system according to any one of clauses 33-36, wherein the plurality of beads comprise fluorescent beads.
38. The system according to any one of clauses 26-37, wherein the instructions, when executed by the processor, further cause the processor to provide the alignment adjustment to a user.
39. The system according to clause 38, wherein the alignment adjustment comprises a software alignment adjustment.
40. The system according to clause 39, wherein the software alignment adjustment comprises a collection angle calibration value, a trigger threshold value, a trigger channel option, a detector setting option, a pulse processing option, or any combination thereof.
41. The system according to clause 38, wherein the alignment adjustment comprises a hardware alignment adjustment.
42. The system according to clause 41, wherein the hardware alignment adjustment comprises an aperture adjustment distance, an aperture adjustment angle, a detector adjustment distance, a detector adjustment angle, or any combination thereof.
43. The system according to any one of clauses 26-42, wherein the instructions, when executed by the processor, further cause the processor to adjust the light scatter detector system based at least in part on the alignment adjustment.
44. The system according to clause 43, wherein adjusting the light scatter detector system comprises performing a software alignment adjustment.
45. The system according to clause 44, wherein the software alignment adjustment comprises adjusting a collection angle calibration value, a trigger threshold value, a trigger channel option, a detector setting option, a pulse processing option, or any combination thereof.
46. The system according to clause 43, wherein adjusting the light scatter detector system comprises performing a hardware alignment adjustment.
47. The system according to clause 46, wherein the hardware alignment adjustment comprises adjusting a position and/or orientation of an optical adjustment component of the flow cytometer.
48. The system according to clause 47, wherein the optical adjustment component is an aperture, a filter, or both.
49. The system according to any one of clauses 46-48, wherein the hardware alignment adjustment comprises adjusting a position and/or orientation of a light scatter detector of the light scatter detector system.
50. A non-transitory computer readable storage medium comprising instructions stored thereon for determining an alignment adjustment for a light scatter detector system of a flow cytometer by a method comprising:
   (a) generating control data by the flow cytometer;
   (b) determining a quantitative metric of the alignment for the light scatter detector system based on the control data; and
   (c) determining the alignment adjustment for the light scatter detector system based on the quantitative alignment metric.
51. The non-transitory computer readable storage medium according to clause 50, wherein determining the quantitative alignment metric comprises calculating a collection angle based on the control data.
52. The non-transitory computer readable storage medium according to clause 51, wherein the collection angle is calculated with respect to an interrogation point of the flow cytometer.
53. The non-transitory computer readable storage medium according to clause 51, wherein the collection angle is calculated using a light scattering model.
54. The non-transitory computer readable storage medium according to clause 53, wherein the light scattering model comprises a Mie light scatter model.
55. The non-transitory computer readable storage medium according to any one of clauses 50-54, wherein the light scatter detector system comprises a side scatter detector, a forward scatter detector, or both.
56. The non-transitory computer readable storage medium according to any one of clauses 50-55, wherein generating the control data comprises:
   i) irradiating a bead with the flow cytometer; and
   ii) measuring a data signal generated by the light scatter detector system.
57. The non-transitory computer readable storage medium according to clause 56, wherein the control data is generated for a plurality of beads, the plurality of beads comprising a first bead and a second bead larger than the first bead.
58. The non-transitory computer readable storage medium according to clause 57, wherein the plurality of beads have a diameter of 50 nm to 3000 nm.
59. The non-transitory computer readable storage medium according to clause 58, wherein the plurality of beads have a diameter of 100 nm to 1200 nm.
60. The non-transitory computer readable storage medium according to any one of clauses 57-59, wherein the plurality of beads comprise polystyrene.
61. The non-transitory computer readable storage medium according to any one of clauses 57-60, wherein the plurality of beads comprise fluorescent beads.
62. The non-transitory computer readable storage medium according to any one of clauses 50-61, further comprising providing the alignment adjustment to a user.
63. The non-transitory computer readable storage medium according to clause 62, wherein the alignment adjustment comprises a software alignment adjustment.
64. The non-transitory computer readable storage medium according to clause 63, wherein the software alignment adjustment comprises a collection angle calibration value, a trigger threshold value, a trigger channel option, a detector setting option, a pulse processing option, or any combination thereof.
65. The non-transitory computer readable storage medium according to clause 62, wherein the alignment adjustment comprises a hardware alignment adjustment.
66. The non-transitory computer readable storage medium according to clause 65, wherein the hardware alignment adjustment comprises an aperture adjustment distance, an aperture adjustment angle, a detector adjustment distance, a detector adjustment angle, or any combination thereof.
67. The non-transitory computer readable storage medium according to any one of clauses 50-66, further comprising adjusting the light scatter detector system based at least in part on the alignment adjustment.
68. The non-transitory computer readable storage medium according to clause 67, wherein adjusting the light scatter detector system comprises performing a software alignment adjustment.
69. The non-transitory computer readable storage medium according to clause 68, wherein the software alignment adjustment comprises adjusting a collection angle calibration value, a trigger threshold value, a trigger channel option, a detector setting option, a pulse processing option, or any combination thereof.
70. The non-transitory computer readable storage medium according to clause 67, wherein adjusting the light scatter detector system comprises performing a hardware alignment adjustment.
71. The non-transitory computer readable storage medium according to clause 70, wherein the hardware alignment adjustment comprises adjusting a position and/or orientation of an optical adjustment component of the flow cytometer.
72. The non-transitory computer readable storage medium according to clause 71, wherein the optical adjustment component is an aperture, a filter, or both.
73. The non-transitory computer readable storage medium according to any one of clauses 70-72, wherein the hardware alignment adjustment comprises adjusting a position and/or orientation of a light scatter detector of the light scatter detector system.
74. A kit comprising a set of standard beads for use in flow cytometry having five or more known diameter sizes, wherein the beads have a diameter of 50 nm to 3000 nm.
75. The kit according to clause 74, wherein the beads comprise six different known diameter sizes.
76. The kit according to clauses 74 or 75, wherein the beads have a diameter of 50 nm to 1200 nm.
77. The kit according to any one of clauses 74-76, wherein the beads comprise polystyrene.
78. The kit according to any one of clauses 74-77, wherein the kit further comprises fluorescent beads.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A method of determining an alignment adjustment for a light scatter detector system of a flow cytometer, the method comprising:
(d) generating control data by the flow cytometer;
(e) determining a quantitative metric of the alignment for the light scatter detector system based on the control data; and
(f) determining the alignment adjustment for the light scatter detector system based on the quantitative alignment metric.

2. The method according to claim 1, wherein determining the quantitative alignment metric comprises calculating a collection angle based on the control data.

3. The method according to claim 2, wherein the collection angle is calculated with respect to an interrogation point of the flow cytometer or is calculated using a light scattering model.

4. The method according to any one of claims 1-3, wherein the light scatter detector system comprises a side scatter detector, a forward scatter detector, or both.

5. The method according to any one of claims 1-4, wherein generating the control data comprises:
iii) irradiating a bead with the flow cytometer; and
iv) measuring a data signal generated by the light scatter detector system.

6. The method according to any one of claims 1-5, further comprising providing the alignment adjustment to a user.

7. The method according to any one of claims 1-6, further comprising adjusting the light scatter detector system based at least in part on the alignment adjustment.

8. The method according to claim 7, wherein adjusting the light scatter detector system comprises performing a software alignment adjustment.

9. The method according to claim 8, wherein the software alignment adjustment comprises adjusting a collection angle calibration value, a trigger threshold value, a trigger channel option, a detector setting option, a pulse processing option, or any combination thereof.

10. The method according to claim 9, wherein adjusting the light scatter detector system comprises performing a hardware alignment adjustment.

11. The method according to claim 10, wherein the hardware alignment adjustment comprises adjusting a position and/or orientation of an optical adjustment component of the flow cytometer.

12. The method according to claim 11, wherein the hardware alignment adjustment comprises adjusting a position and/or orientation of a light scatter detector of the light scatter detector system.

13. A system comprising:
a light scatter detector system configured to generate data signals from light received from an interrogation point of a flow cytometer; and
a processor comprising memory operably coupled to the processor wherein the memory comprises instructions stored thereon, which when executed by the processor, cause the processor to analyze the control data to:
(d) generating control data by the flow cytometer;
(e) determining a quantitative metric of the alignment for the light scatter detector system based on the control data; and
(f) determining the alignment adjustment for the light scatter detector system based on the quantitative alignment metric.

14. A non-transitory computer readable storage medium comprising instructions stored thereon for determining an alignment adjustment for a light scatter detector system of a flow cytometer by a method comprising:
(d) generating control data by the flow cytometer;
(e) determining a quantitative metric of the alignment for the light scatter detector system based on the control data; and
(f) determining the alignment adjustment for the light scatter detector system based on the quantitative alignment metric.

15. A kit comprising a set of standard beads for use in flow cytometry having five or more known diameter sizes, wherein the beads have a diameter of 50 nm to 3000 nm.
